# EUROPEAN PATENT APPLICATION

(11) **EP 4 749 597 A1**
(43) Date of publication of application: **27.05.2026**
(21) Application number: 24845427.4
(22) Date of filing: 11.07.2024
(51) Int. Cl.: G08G 1/00, G06T 7/00, G06V 10/70

(54) **LEARNING SYSTEM, METHOD, AND PROGRAM, AND REGION ESTIMATION SYSTEM**

(30) Priority: 21.07.2023 JP 2023119198
(71) Applicant: TOYOTA JIDOSHA KABUSHIKI KAISHA, Toyota-Shi, Aichi-Ken 471-8571 (JP)
(72) Inventor: TANAKA Kazuhito, Toyota-shi, Aichi 471-8571 (JP)
(74) Representative: D Young & Co LLP
(86) International application number: PCT/JP2024/025134
(87) International publication number: WO 2025/023046

(57) **Abstract**

To accurately estimate a passable region including a region behind an object in a captured image by efficiently generating a learning data set used for machine learning of an estimation model. A learning system (1) includes: a generation unit (143) configured to generate a ground truth label image (1513) including information regarding passability or impassability of a moving body at a point behind an object (31) from a viewpoint from an arbitrary imaging position using arrangement information (41) of the object arranged at an arbitrary position in a virtual space (3); and a training unit (144) configured to train an estimation model (160) that estimates a passable region of the moving body in the imaging region using a color information image (1511) in which the imaging region including the object is imaged from the imaging position, depth information (1512) from the imaging position to the imaging region, and the ground truth label image (1513).

## Description

### Technical Field

The present invention relates to a learning system, a method, and a program, and a region estimation system.

### Background Art

In recent years, in order to estimate a passable region of a vehicle or the like from a captured image for a predetermined traffic environment, it is required to use an estimation model of artificial intelligence (AI) such as a neural network. In order to improve estimation accuracy of the estimation model, machine learning of the estimation model is executed using training data such as a captured image in a traffic environment.

Patent Literature 1 discloses a technique related to a training data generation device. The training data generation device acquires external environment information (captured image) collected by a camera or the like mounted in the vehicle. Thereafter, in a case where the vehicle can pass through the actual region corresponding to a road surface region in the captured image without executing an avoidance operation, the training data generation device gives a label indicating passability to the captured image. On the other hand, in a case where the vehicle executes the avoidance operation in the road surface region, the training data generation device does not give a label to the captured image or gives a label indicating impassability to the captured image.

### Citation List

### Patent Literature

Patent Literature 1: International Patent Publication No. WO2019/116423

### Summary of Invention

Here, the technique according to Patent Literature 1 determines passability or impassability in a road surface region while the vehicle actually travels. Therefore, in order to determine passability or impassability in a region behind an obstacle contained in the captured image, it is necessary for the vehicle to actually travel or image the region behind the obstacle. However, there is a limit to allowing the vehicle to actually travel and capture images of every point. Therefore, there is a problem in that it is difficult to execute machine learning of the estimation model in order to accurately estimate passability or impassability in the road surface region.

The present disclosure has been made to solve such a problem, and a passable region including a region behind an object in a captured image is accurately estimated by efficiently generating a learning data set used for machine learning of an estimation model.

According to a first aspect of the present disclosure, a learning system includes: a generation unit configured to generate ground truth label information including information regarding passability or impassability of a moving body at a point behind an object from a viewpoint from an arbitrary imaging position using arrangement information of the object arranged at an arbitrary position in a virtual space; and a training unit configured to train an estimation model that estimates a passable region of the moving body in the imaging region using a color information image in which the imaging region including the object is imaged from the imaging position, depth information from the imaging position to the imaging region, and the ground truth label information.

In the above-described aspect, by using the arrangement information of the object in the virtual space, it is possible to identify whether a point is hidden behind an object even from a viewpoint from an arbitrary imaging position. Therefore, it is possible to generate ground truth label information in which passability or impassability of a moving body is labelled accurately. Therefore, a set of the captured image from the same viewpoint and the ground truth label information can be efficiently generated as the learning data set. By using an estimation model subjected to machine learning using such the learning data set, it is possible to accurately estimate a passable region including a region behind an object in the captured image.

The generation unit preferably generates the ground truth label information by regarding at least a region other than a horizontal projection plane in a case where the object is viewed from above based on the arrangement information in an object region corresponding to the object in the imaging region, as a point behind the object from a viewpoint from the imaging position. As described above, even in a region that looks like an object region from a viewpoint from an arbitrary imaging position, the horizontal projection plane in a case where the object is viewed from above can be identified by the arrangement information. Therefore, it is possible to accurately label passability or impassability of the moving body at least in a region other than the horizontal projection plane.

Further, the generation unit may generate the ground truth label information by making at least a ground plane of the object specified based on the arrangement information in the object region impassable and making at least a region other than the horizontal projection plane passable. Even in an object region from a viewpoint from an arbitrary imaging position, in a case where the region is a ground plane in the arrangement information, it is at least not possible for a moving body to pass. Conversely, there is a high probability of at least a region other than the horizontal projection plane being passable. Accordingly, it is possible to generate the ground truth label information with high accuracy.

Further, the generation unit may generate the ground truth label information by making a region of a horizontal projection plane including the ground plane in the object region impassable. A ground plane and a non-ground plane of an object are included below the horizontal projection plane, both of which are highly likely to be impassable by the moving body. Therefore, it is possible to generate the ground truth label information with higher accuracy.

The generation unit may generate the ground truth label information such that a different label related to the passability or impassability is given to each point included in the object region depending on whether the point is behind the object from a viewpoint from the imaging position. For example, even in the object region from the viewpoint from an arbitrary imaging position, a point that can be identified as a point behind the object from the arrangement information often has different passability or impassability from a point where the object is actually located. Therefore, it is possible to generate the ground truth label information with high accuracy.

The generation unit preferably generates, as the ground truth label information, a passable region image to which a label related to the passability or impassability is given to each pixel of an image in which the imaging region is imaged from the imaging position. Accordingly, a correspondence relationship in units of pixels between a captured image from the same viewpoint and the ground truth label information becomes clear, and the accuracy of the machine learning of the region estimation model is improved.

Further, the generation unit may specify plane arrangement information including the object in the virtual space from the arrangement information, and generate the passable region image serving as a viewpoint from the imaging position using the plane arrangement information. Accordingly, it is possible to generate the ground truth label information accurately brought close to the coordinate system of the captured image captured from an arbitrary capturing position.

Alternatively, the generation unit may generate the ground truth label information such that a label indicating that it is necessary to confirm the passability or impassability is given to a point behind the object. This is because there is also a case where it is difficult to identify passability or impassability by the arrangement information, and it may be preferable to actually encourage the confirming of passability or impassability.

The training unit may execute machine learning on the estimation model using a learning data set in which the color information image and the depth information are set as input data and the ground truth label information is set as ground truth data. Accordingly, the format of the training data of the estimation model becomes clear, and processing efficiency of the machine learning can be improved.

The image processing device may further include: an arrangement unit configured to arrange the object at an arbitrary position in the virtual space and arrange an imaging device at the imaging position; and an acquisition unit configured to acquire the color information image in which the imaging region is imaged from the imaging position by the imaging device, and acquire a depth image in which a distance from the imaging position to the imaging region is measured as the depth information. By setting a type of input data of the estimation model to the color information image and the depth image acquired from the same viewpoint, it is possible to reduce a deviation between a result of the machine learning based on the data acquired in the virtual space on the simulator and an estimation result in the real environment.

According to a second aspect of the present disclosure, a learning method causes a computer to execute: generating ground truth label information including information regarding passability or impassability of a moving body at a point behind an object from a viewpoint from an arbitrary imaging position using arrangement information of the object arranged at an arbitrary position in a virtual space; and training an estimation model that estimates a passable region of the moving body in the imaging region using a color information image in which the imaging region including the object is imaged from the imaging position, depth information from the imaging position to the imaging region, and the ground truth label information.

According to a third aspect of the present disclosure, a learning program causes a computer to execute: a generation process of generating ground truth label information including information regarding passability or impassability of a moving body at a point behind an object from a viewpoint from an arbitrary imaging position using arrangement information of the object arranged at an arbitrary position in a virtual space; and a learning process of training an estimation model that estimates a passable region of the moving body in the imaging region using a color information image in which the imaging region including the object is imaged from the imaging position, depth information from the imaging position to the imaging region, and the ground truth label information.

In the second and third aspects, the same effects as those of the first aspect can be expected.

According to a fourth aspect of the present disclosure, a region estimation system includes an estimation unit configured to estimate a passable region in a second region by inputting, to the estimation model trained by the learning system according to the first aspect, a second color information image obtained by imaging the second region including a second object from a second imaging position of a predetermined traffic environment and second depth information from the second imaging position to the second region.

In this way, in the fourth aspect, by using the estimation model subjected to the machine learning similarly to the first aspect, it is possible to accurately estimate the passable region including the region behind the object in the captured image from the captured image and the depth information from the same viewpoint in the real environment.

According to the present disclosure, by efficiently generating the learning data set used for the machine learning of the estimation model, it is possible to accurately estimate a passable region including a region behind an object in the captured image.

### Brief Description of Drawings

Fig. 1 is a block diagram illustrating a configuration including a learning system and a region estimation system according to a first embodiment;
Fig. 2 is a block diagram illustrating an internal configuration of the learning system according to the first embodiment;
Fig. 3 is a block diagram illustrating an internal configuration of a moving body according to the first embodiment;
Fig. 4 is a flowchart illustrating a flow of a learning process according to the first embodiment;
Fig. 5 is a diagram illustrating an example of a color information image captured in a virtual space;
Fig. 6 is a diagram illustrating an example of a depth image captured in the virtual space;
Fig. 7 is a diagram illustrating an example of an old ground truth label image in a state where the back side of an object in the virtual space cannot be identified;
Fig. 8 is a diagram illustrating an example of a ground truth label image of a passable region in the virtual space according to the first embodiment;
Fig. 9 is a diagram illustrating an example in which different labels are given to a ground plane and a non-ground plane in an object region;
Fig. 10 is a flowchart illustrating a flow of a region estimation process according to the first embodiment;
Fig. 11 is a diagram illustrating an example of a color information image;
Fig. 12 is a diagram illustrating an example of a depth image;
Fig. 13 is a diagram illustrating an example of an old region estimation image in a state where the back side of the object cannot be identified; and
Fig. 14 is a diagram illustrating an example of a region estimation image of a passable region according to the first embodiment.

### Description of Embodiments

Hereinafter, specific embodiments to which the present invention including the above-described aspects is applied will be described in detail with reference to the drawings. In the drawings, the same elements are denoted by the same reference numerals, and redundant description will be omitted as necessary for clarity of description.

### <First Embodiment>

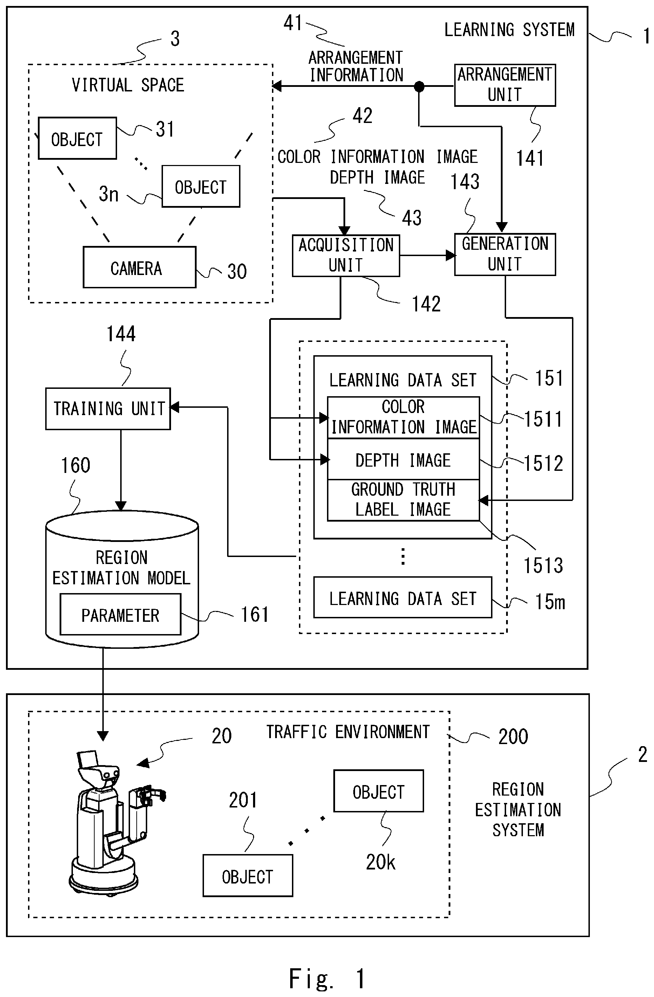

Fig. 1 is a block diagram illustrating a configuration including a learning system 1 and a region estimation system 2 according to a first embodiment. The learning system 1 is an information system that generates a learning data set 151 or the like using a captured image of an object 31 or the like in a virtual space 3 and the arrangement information of the object 31 or the like, and executes machine learning of a region estimation model 160 using the learning data set 151 or the like. Here, the region estimation model 160 is an AI model that estimates a passable region of a predetermined moving body (for example, a moving body 20) from the imaging region. Details of the region estimation model 160 will be described below.

The learning system 1 includes an arrangement unit 141, an acquisition unit 142, a generation unit 143, and a training unit 144. The arrangement unit 141 arranges objects 31 to 3n (where n is a natural number of 1 or more) at an arbitrary position in the virtual space 3, and arranges the camera 30 at an arbitrary imaging position. The virtual space 3 can be said to be a virtual 3-dimensional environment on a predetermined simulator, for example, a virtual traffic environment. The object 31 or the like is a virtual object, and the camera 30 can be said to be an imaging device, particularly a virtual imaging device. The camera 30 images color information in an imaging region. Further, the camera 30 may image depth information as a depth image from the imaging position to the imaging region. For example, the camera 30 may have a function of capturing a depth image in the same capturing region as the color information image. The depth information may not be a depth image. Therefore, the arrangement unit 141 may arrange a virtual depth measurement sensor or the like at the same imaging position as the camera 30. The depth measurement sensor or the like may measure a distance from an imaging position to an imaging region as depth information or may execute imaging as a depth image. For example, the depth measurement sensor or the like may measure a distance to an object or the like by emitting a light beam. The camera 30, the depth measurement sensor, and the like are not limited thereto.

The arrangement unit 141 may execute, for example, the following process by a function of the simulator. First, the arrangement unit 141 randomly selects object information of at least any one of a type of object to be arranged, a 3-dimensional shape, and a texture applied to a surface. The arrangement unit 141 randomly selects the number of objects to be arranged and positions of the objects in the virtual space 3 where each object is arranged. The arrangement unit 141 randomly selects a position (imaging position) of the camera 30 to be arranged. The arrangement unit 141 generates arrangement information 41 including the selected object information, the selected number and positions of objects, and the selected position of the camera 30. Based on the arrangement information 41, the arrangement unit 141 arranges the objects 31 to 3n and the camera 30 in the virtual space 3. For example, the arrangement unit 141 may generate the arrangement information 41 by domain randomization in the simulator, and arrange each object 31 or the like and the camera 30. Accordingly, it is possible to reduce a gap between the simulator and the real world. Alternatively, the arrangement unit 141 may generate the arrangement information 41 by selecting the object information, the number and position of objects, and the position of the camera 30 or the like based on a predetermined rule.

The acquisition unit 142 acquires a color information image 42 in which an imaging region is imaged from an imaging position by the camera 30 arranged in the virtual space 3. That is, the camera 30 images an imaging region including the object 31 or the like at the imaging position, and outputs the imaging region as the color information image 42 to the acquisition unit 142. The acquisition unit 142 acquires, as depth information, a depth image 43 in which the distance from the imaging position to the imaging region is measured by the camera 30 or the depth measurement sensor arranged in the virtual space 3. That is, the camera 30 or the like measures a distance from the imaging position to the object 31 or the like, and outputs the distance as the depth image 43 to the acquisition unit 142. In other words, the acquisition unit 142 acquires the depth information of each pixel in an imaging range corresponding to the color information image 42 using the imaging position of the camera 30 as a starting point. It is assumed that the color information image 42 and the depth image 43 have a common imaging range (coordinate system). At this time, the acquisition unit 142 stores the acquired color information image 42 and depth image 43 as a color information image 1511 and a depth image 1512 in a memory or a storage unit to be described below. It can also be said that the acquisition unit 142 renders the color information image 42 and the depth image 43 by a function of the simulator.

Using the arrangement information 41, the generation unit 143 generates ground truth label information including information regarding passability or impassability of a moving body at a point behind the object 31 or the like from the viewpoint from the imaging position of the camera 30. Here, the "point behind the object 31 or the like" is a point at which the ground or the like is hidden (invisible) by the object 31 or the like from the viewpoint from the imaging position of the camera 30. The "information regarding passability or impassability of the moving body" is information indicating passability, impassability, or that it is necessary to confirm passability or impassability. The "information regarding passability or impassability of the moving body" may be a binary value of passability or impassability. The "ground truth label information" is information in which information regarding passability or impassability of a moving body is assigned as a label for each point corresponding to an imaging region in the virtual space 3. In a case where the ground truth label information is generated, the generation unit 143 may use the color information image 42 or the depth image 43 acquired by the acquisition unit 142 together with the arrangement information 41.

In particular, the generation unit 143 preferably generates ground truth label information by regarding at least a region other than a horizontal projection plane in a case where the object is viewed from above based on the arrangement information 41 in an object region corresponding to the object in the imaging region as a point behind the object from the viewpoint from the imaging position. Accordingly, even in a region that looks like an object region from a viewpoint from an arbitrary imaging position, the horizontal projection plane in a case where the object is viewed from above can be identified by the arrangement information 41. Therefore, it is possible to accurately label passability or impassability of the moving body at least in a region other than the horizontal projection plane.

Further, the generation unit 143 may generate ground truth label information by making at least the ground plane of the object specified based on the arrangement information 41 in the object region impassable and making at least a region other than the horizontal projection plane passable. Even in an object region from a viewpoint from an arbitrary imaging position, in a case where the region is a ground plane in the arrangement information 41, it is at least not possible for a moving body to pass. Conversely, there is a high probability of at least a region other than the horizontal projection plane being passable. Accordingly, it is possible to generate the ground truth label information with high accuracy. Further, the generation unit 143 may generate ground truth label information by making a region of a horizontal projection plane (including the ground plane) in the object region impassable. A ground plane and a non-ground plane of an object are included below the horizontal projection plane, both of which are highly likely to be impassable by the moving body. Therefore, it is possible to generate the ground truth label information with higher accuracy. There may be a case where a moving body can pass through even a non-ground plane of an object under the horizontal projection plane. In this case, for example, the generation unit 143 may generate the ground truth label information indicating that the moving body can pass through the non-ground plane of the object under the horizontal projection plane from the 3-dimensional shape or the like of the object in the arrangement information 41. Alternatively, the generation unit 143 may generate the ground truth label information such that a label indicating that it is necessary to confirm passability or impassability is given to a point behind the object. This is because there is also a case where it is difficult to identify passability or impassability by the arrangement information 41, and it may be preferable to actually encourage the confirming of passability or impassability.

Here, instead of the "region other than the horizontal projection plane", the generation unit 143 may regard a non-ground plane of the object as a point behind the object and generate the ground truth label information. In this way, even in a region that appears to be an object region from a viewpoint from an arbitrary imaging position, the non-ground plane between a traveling region of the moving body and an object can be identified with the arrangement information. Therefore, it is possible to accurately label the passability or impassability of the moving body to the non-ground plane.

Further, the generation unit 143 may generate the ground truth label information by making the ground plane of the object specified based on the arrangement information 41 in the object region impassable and making the non-ground plane passable. Even in an object region from a viewpoint from an arbitrary imaging position, in a case where the region is the ground plane in the arrangement information 41, there is a high probability of impassability of the moving body. Conversely, in a case where the region is the non-ground plane, there is a high probability of passability. Accordingly, it is possible to generate the ground truth label information with high accuracy.

The generation unit 143 may generate the ground truth label information such that a different label related to the passability or impassability is given to each point included in the object region depending on whether the point is behind the object from the viewpoint from the imaging position. For example, even in an object region from the viewpoint from the arbitrary imaging position, passability or impassability at a point that can be identified as a side behind the object from the arrangement information 41 is different in many cases from that at a point where the object is actually located. Therefore, it is possible to generate the ground truth label information with high accuracy.

The generation unit 143 preferably generates, as the ground truth label information, a passable region image to which a label related to passability or impassability is given to each pixel of an image in which the imaging region is imaged from the imaging position. For example, the generation unit 143 generates a ground truth label image 1513 to which a label indicating passability or impassability is given to each pixel of the color information image 1511. Accordingly, a correspondence relationship in units of pixels between a captured image from the same viewpoint and the ground truth label information becomes clear, and the accuracy of the machine learning of the region estimation model 160 is improved. Here, the passable region image can be said to be an image to which a label related to passability or impassability is given to a region that cannot be seen behind the object when seen from an angle of the camera 30.

Furthermore, the generation unit 143 may specify plane arrangement information including an object in the virtual space 3 from the arrangement information 41 and generate the passable region image that is a viewpoint from the imaging position using the plane arrangement information. Accordingly, it is possible to generate the ground truth label information accurately brought close to the coordinate system of the captured image captured from an arbitrary capturing position.

The generation unit 143 generates the generated ground truth label image 1513 as the learning data set 151 in association with the color information image 1511 and the depth image 1512. At this time, the generation unit 143 stores the learning data set 151 in a memory or a storage unit to be described below. Similarly, the generation unit 143 generates a ground truth label image from other arrangement information in the arrangement unit 141. The generation unit 143 similarly generates a learning data set 15m (where m is a natural number of 1 or more) for the other arrangement information and stores the learning data set 15m in the memory or the like. The learning system 1 may generate at least one learning data set.

The training unit 144 trains the region estimation model 160 using the color information image 1511 in which the imaging region including the object is imaged from the imaging position, the depth image 1512 which is the depth information from the imaging position to the imaging region, and the ground truth label image 1513.

The region estimation model 160 is a model formula such as a function defined with a parameter and a variable or a computer program. The region estimation model 160 is, for example, an estimation model that estimates a passable region of the moving body in the imaging region corresponding to the color information image 1511. In particular, the region estimation model 160 may use the color information image and the depth information as input data and may use an image indicating the estimated passable region as output data. The region estimation model 160 is typically configured by a neural network. For example, the region estimation model 160 may be a neural network that executes semantic segmentation. In particular, the region estimation model 160 is preferably a type of convolutional neural network (CNN). For example, the region estimation model 160 may set each pixel value or the like of the color information image and the depth image in each element (neuron) of an input layer, and output a label of each pixel of the image indicating the passable region to each element of an output layer. Various models and networks of which an input and an output are compatible with the above can be applied to the region estimation model 160.

Specifically, the training unit 144 executes machine learning on the estimation model using a learning data set in which the color information image and the depth information are set as input data and the ground truth label information is set as ground truth data (training data). The training unit 144 may apply a technique corresponding to statistical machine learning to the estimation model. For example, the training unit 144 executes deep learning on the region estimation model 160 using the learning data sets 151 to 15m. That is, the training unit 144 optimizes and updates a parameter 161 of the region estimation model 160 using the learning data sets 151 to 15m to improve estimation accuracy of a passable region.

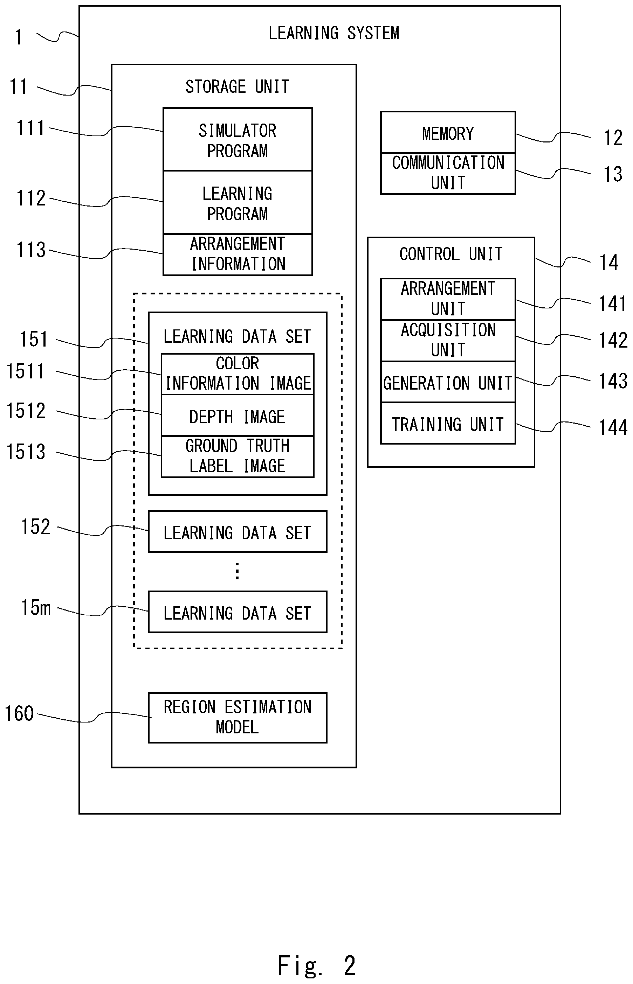

Fig. 2 is a block diagram illustrating an inner configuration of the learning system 1 according to the first embodiment. Fig. 2 illustrates an example of a case where the learning system 1 is realized by one information processing device, that is, a computer. However, the learning system 1 may be made redundant by a plurality of computers or may be a computer system realized by a plurality of computers that have different functional blocks.

The learning system 1 includes a storage unit 11, a memory 12, a communication unit 13, and a control unit 14. The storage unit 11 is an example of a nonvolatile storage device such as a hard disk or a flash memory. The storage unit 11 stores a simulator program 111, a learning program 112, arrangement information 113, the learning data sets 151 to 15m, and the region estimation model 160. The learning program 112 may include the simulator program 111. Some or all of the arrangement information 113, the learning data sets 151 to 15m, and the region estimation model 160 may be stored in a storage device different from the storage unit 11. For example, some or all of the arrangement information 113, the learning data sets 151 to 15m, and the region estimation model 160 may be stored in an external storage device connected to the learning system 1.

The simulator program 111 is a computer program in which a process corresponding to the simulator is implemented. For example, in the simulator program 111, a process of arranging the object 31 or the like and the camera 30 in the virtual space 3 and executing imaging by the camera 30 may be implemented. The learning program 112 is a computer program in which at least a process of generating ground truth label information and a process of training the region estimation model 160 are implemented. In the learning program 112, a generation process for arrangement information using the simulator program 111, an arrangement process based on the arrangement information, and an acquisition process for a color information image and a depth image may be further implemented. That is, the processes corresponding to the arrangement unit 141, the acquisition unit 142, the generation unit 143, and the training unit 144 described above may be implemented in the learning program 112.

The arrangement information 113 is information corresponding to the above-described arrangement information 41. That is, the arrangement information 113 includes a type of object, a 3-dimensional shape of the object, and object information such as texture applied to the surface of the object arranged in the virtual space 3, the number and position (3-dimensional coordinates or the like) of objects to be arranged, and a position (imaging position such as 3-dimensional coordinates or the like) of the camera 30 or the like. In a case where the arrangement process is executed a plurality of times, the arrangement information 113 may be a set of a plurality of pieces of arrangement information corresponding to each time.

The learning data set 151 is a set of the color information image 1511, the depth image 1512, and the ground truth label image 1513 and is information in which these images are associated with each other. As described above, the color information image 1511 and the depth image 1512 are used as input data to the region estimation model 160. The ground truth label image 1513 is used as ground truth data in the machine learning of the region estimation model 160. The ground truth label image 1513 is image data in which a label related to passability or impassability is given to each pixel. The learning data sets 152 to 15m have the same configuration as the learning data set 151. The region estimation model 160 is a model described above.

The memory 12 is a volatile storage device such as a random access memory (RAM) and is a storage region for temporarily holding information during an operation of the control unit 14. The communication unit 13 is a communication interface between the learning system 1 and an external device or a communication network. The communication unit 13 may be realized by, for example, a general-purpose or dedicated circuit realized by a semiconductor device.

The control unit 14 controls each configuration of the learning system 1. The control unit 14 is, for example, a processor such as a central processing unit (CPU), a graphics processing unit (GPU), a field-programmable gate array (FPGA), or a quantum processor (quantum computer control chip). The control unit 14 reads the simulator program 111 and the learning program 112 from the storage unit 11 into the memory 12, and executes the simulator program 111 and the learning program 112. Accordingly, the control unit 14 realizes the functions of the arrangement unit 141, the acquisition unit 142, the generation unit 143, and the training unit 144 described above.

In a case where some or all of the constituents of the learning system 1 are realized by a plurality of information processing devices, circuits, or the like, the plurality of information processing devices, circuits, and the like may be arranged in a centralized manner or in a distributed manner. For example, the information processing device, the circuit, or the like may be realized as a form in which each is connected via a communication network, such as a client server system and a cloud computing system.

Returning to Fig. 1, the description will be continued. The region estimation system 2 is an information system that estimates a passable region using the region estimation model 160 trained by the learning system 1 from an image or the like captured by a camera mounted on the moving body 20 in a predetermined traffic environment 200, and controls an operation of the moving body 20 based on the passable region.

The traffic environment 200 is a real environment in which physical objects 201 to 20k (where k is a natural number of 1 or more) are arranged and the moving body 20 that is a robot autonomously travels and executes a predetermined operation. The traffic environment 200 is typically in a factory where luggage, machines, and the like are arranged in various places, but may be a general road, a sidewalk, or the like.

The region estimation system 2 executes region estimation using the region estimation model 160 in order to control a movement plan and an operation of the moving body 20 in the traffic environment 200. In the following description, it is assumed that the trained region estimation model 160 is stored in the moving body 20. Here, the moving body 20 may refer to the trained region estimation model 160 stored in an external storage device through wireless communication.

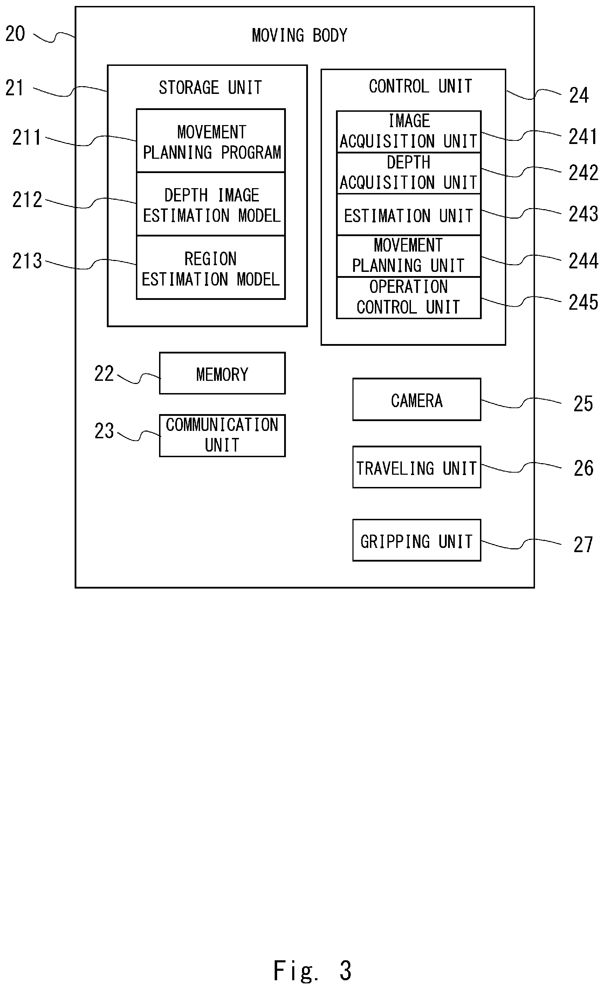

Fig. 3 is a block diagram illustrating an internal configuration of the moving body 20 according to the first embodiment. The moving body 20 includes a storage unit 21, a memory 22, a communication unit 23, a control unit 24, a camera 25, a traveling unit 26, and a gripping unit 27. The storage unit 21 is an example of a nonvolatile storage device such as a hard disk or a flash memory. The storage unit 21 stores a movement planning program 211, a depth image estimation model 212, and a region estimation model 213. The movement planning program 211 is a computer program in which a region estimation process, a movement planning process, and an operation control process to be described below are implemented.

The depth image estimation model 212 is an AI model that estimates depth information that is depth information for each pixel in the same imaging region as the input color information image and generates a depth image. The depth image estimation model 212 is a model formula such as a function defined with a parameter and a variable or a computer program. In particular, the depth image estimation model 212 uses the color information image as input data, estimates depth information that is depth information for each pixel in the same imaging region as the color information image, and uses the depth image generated by the estimated depth information as output data. The depth image estimation model 212 may estimate and output the depth image from a pair of color information images captured by a stereo camera of the moving body 20. Alternatively, the depth image estimation model 212 may estimate and output the depth image from the color information image captured by a monocular camera of the moving body 20. It is assumed that the depth image estimation model 212 is trained by machine learning in advance using many learning data sets. The depth image estimation model 212 is typically configured with a neural network, but is not limited thereto.

The region estimation model 213 is obtained by storing the region estimation model 160 trained by the above-described learning system 1 in the moving body 20.

The memory 22 is a volatile storage device such as a RAM and is a storage region where information is temporarily held during operation of the control unit 24. The communication unit 23 is a communication interface between the moving body 20 and an external device or a communication network. The communication unit 23 may be realized by, for example, a general-purpose or dedicated circuit realized by a semiconductor device.

The control unit 24 controls each constituent of the moving body 20. The control unit 24 is, for example, a processor such as a CPU, a GPU, an FPGA, or a quantum processor. The control unit 24 reads the movement planning program 211 from the storage unit 21 into the memory 12 and executes the movement planning program 211. The control unit 14 reads the depth image estimation model 212 and the region estimation model 213 into the memory 12 as necessary, and executes the depth image estimation model 212 and the region estimation model 213. Accordingly, the control unit 14 realizes the functions of the image acquisition unit 241, the depth acquisition unit 242, the estimation unit 243, the movement planning unit 244, and the operation control unit 245 described above. The depth image estimation model 212 and the region estimation model 213 may be stored in an external storage device connected to the moving body 20. In this case, the control unit 14 acquires the depth image and the region estimation image by transmitting and receiving data between the depth image estimation model 212 and the region estimation model 213 through the communication unit 13.

The image acquisition unit 241 acquires a captured image captured by the camera 25 by controlling the camera 25 during movement planning or the like. The image acquisition unit 241 acquires at least a color information image. The depth acquisition unit 242 inputs the color information image acquired by the image acquisition unit 241 to the depth image estimation model 212, and acquires the depth image from the depth image estimation model 212. The estimation unit 243 inputs the color information image and the depth image to the region estimation model 213, and acquires an estimation result of a region where the moving body 20 can pass in the imaging region as a region estimation image. The movement planning unit 244 generates a movement plan of the moving body 20 using the region estimation image. Here, the "movement plan" may be, for example, a plan for generating a route for moving from a current position of the moving body 20 to a destination via the passable region based on the region estimation image. The operation control unit 245 controls an operation of the moving body 20 based on the generated movement plan. Specifically, the operation control unit 245 instructs the traveling unit 26 to travel to the passable region. The operation control unit 245 instructs the gripping unit 27 to execute a gripping operation as necessary.

The camera 25 is a physical imaging device. The camera 25 may be a stereo camera that is a set of a plurality of camera devices. The camera 25 images an imaging region in the traffic environment 200 periodically or in response to a control signal or the like from the control unit 24, and outputs the captured image to the control unit 24. At this time, the imaging region may include some or all of the object 201 and the like.

The traveling unit 26 is a wheel, a leg, or the like for traveling on the ground which is a traveling region in the traffic environment 200. The gripping unit 27 is a physical constituent that grips the object 201 or the like. The gripping unit 27 is, for example, a robot hand, but is not limited thereto. The traveling unit 26 and the gripping unit 27 operate in response to a control signal, an instruction, a command, or the like from the control unit 24.

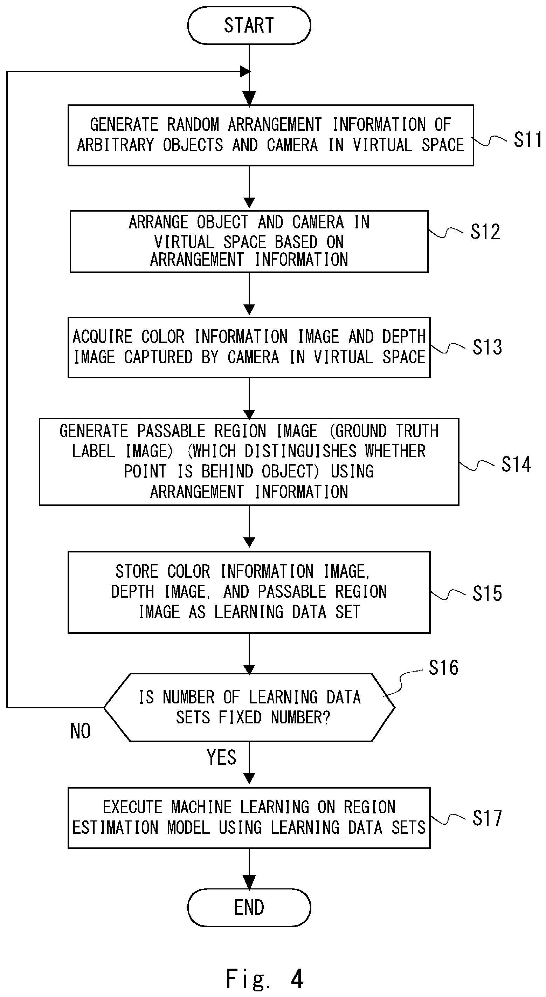

Fig. 4 is a flowchart illustrating a flow of a learning process according to the first embodiment. First, the arrangement unit 141 generates random arrangement information 41 of the arbitrary objects 31 to 3n and the camera 30 in the virtual space 3 (S11). Specifically, the arrangement unit 141 randomly selects the number of objects to be arranged and randomly selects the above-described object information and positions (3-dimensional coordinates) of each of the number of selected objects. At this time, the arrangement unit 141 may randomly select a type, a 3-dimensional shape (size), and texture information for each of the selected objects. The arrangement unit 141 randomly selects a type (function) and a position (3-dimensional coordinates) of the camera 30 to be arranged. The arrangement unit 141 generates the arrangement information 41 including the object information and the positions of the number of selected objects and the type and the position of camera 30, and stores the arrangement information in the storage unit 11 or the memory 12.

Subsequently, the arrangement unit 141 arranges the object 31 or the like and the camera 30 in the virtual space 3 based on the generated arrangement information 41 (S12). Hereinafter, to facilitate description, it is assumed that an imaging range of the camera 30 includes a plurality of objects including the objects 31 and 32.

Subsequently, the acquisition unit 142 acquires the color information image 42 and the depth image 43 captured by the camera 30 in the virtual space 3 (S13).

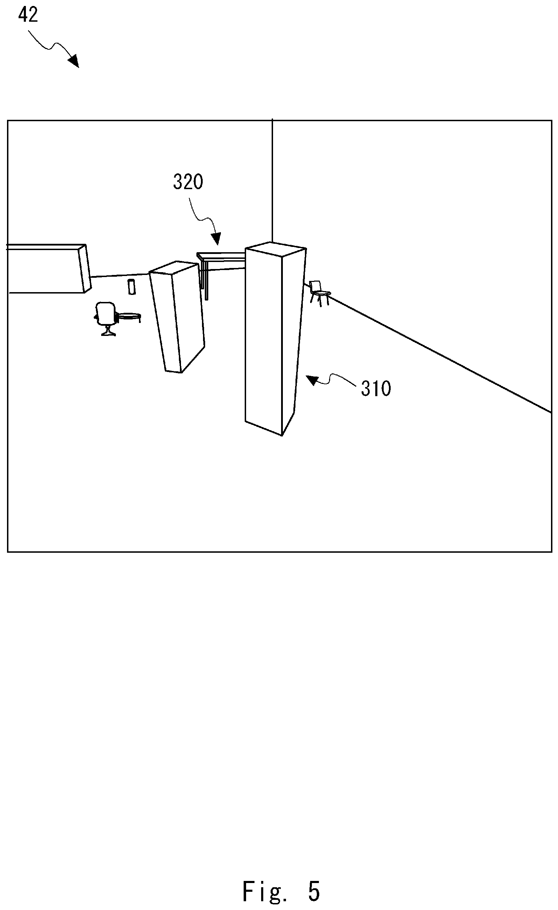

Fig. 5 is a diagram illustrating an example of the color information image 42 captured in the virtual space 3. The color information image 42 is data including XY coordinates and color information of each pixel. The color information image 42 is, for example, an image expressed in a plurality of colors such as RGB, CMYK, and gray scales. For example, the color information image 42 indicates that the object regions 310 and 320 partially overlap from the viewpoint of the imaging position of the camera 30. Here, it is assumed that the object region 310 is a region corresponding to the object 31 in the imaging region of the camera 30, and the object region 320 is a region corresponding to the object 32 in the imaging region of the camera 30. The color information image 42 indicates that a point behind the object 31 in the object region 310 cannot be identified.

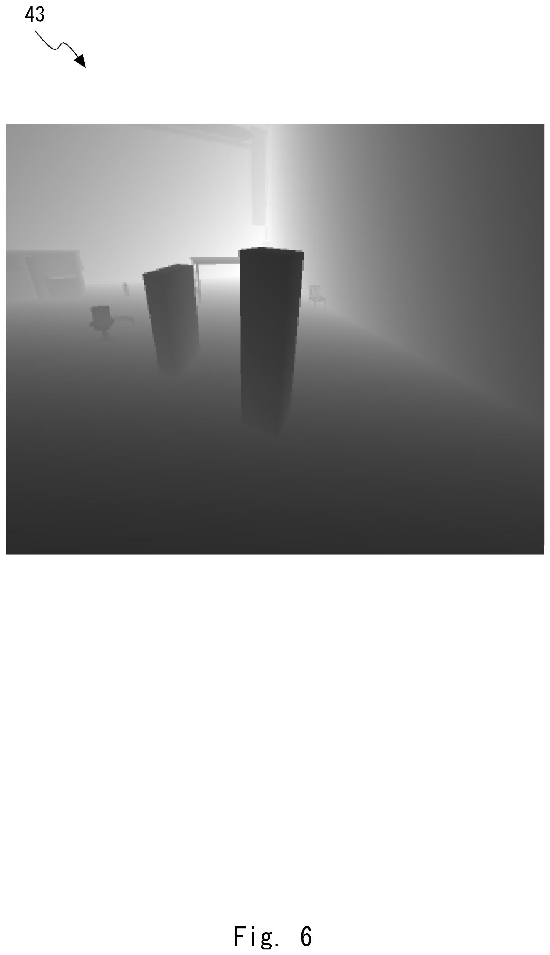

Fig. 6 is a diagram illustrating an example of the depth image 43 captured in the virtual space 3. The depth image 43 is an image captured from the same imaging position as that of the camera 30 in the same imaging region (imaging range) as that of the color information image 42. The depth image 43 is an image in which a depth of each object, wall, or floor from the imaging position is indicated by shading. The depth image 43 indicates an example in which the color is darker as the object is closer to the imaging position and the color is lighter as the object is farther from the imaging position. The depth image 43 may indicate a distance (depth length) from the imaging position to each point in each pixel by a numerical value or the like. However, the manner of expressing the depth image 43 and the depth information is not limited thereto.

Returning to Fig. 4, the description will be continued. The generation unit 143 generates a passable region image (ground truth label image 45) (which distinguishes whether the point is behind the object) using the arrangement information 41 (S14). For example, the generation unit 143 specifies the arrangement information on a 2-dimensional plane in the virtual space 3 from the arrangement information 41. For example, the generation unit 143 specifies a plan layout from the arrangement information 41. At this time, the plan layout may be an image obtained by binarizing an object region on a plane and an absence region of the object. That is, it can be said that, in the plan layout, a label indicating impassability for the object region and a label indicating passability for the absence region of the object on the plane are given. The generation unit 143 generates a passable region image by converting the plan layout into a coordinate system in a case where the imaging region of the color information image 42 is imaged from the imaging position of the camera 30. That is, the generation unit 143 deforms the object shape on the plane by transforming the plan layout of the virtual space 3 viewed from above into the coordinate system of the viewpoint of the camera 30. The generation unit 143 may generate the passable region image by masking the transformed (converted) figure in the color information image 42 in accordance with the coordinate system of the color information image 42. At this time, since a region where there is no object on the plane (at least a region other than the horizontal projection plane in the non-ground plane) is originally a free region, the region is a region where there is no object even after the conversion, and is given a passable label. On the other hand, a region where there is an object (at least the ground plane) on the plane is a region where there is an object even after the conversion, and is given an impassable label. In other words, it can be said that the generation unit 143 generates an image in which the height direction of each object included in the color information image 42 is flattened as the passable region image. The generation unit 143 generates a passable region image by giving a label indicating impassability even to a region recognized as an impassable region such as a wall region in the color information image 42. This is because the wall region or the like may not appear in the plan layout.

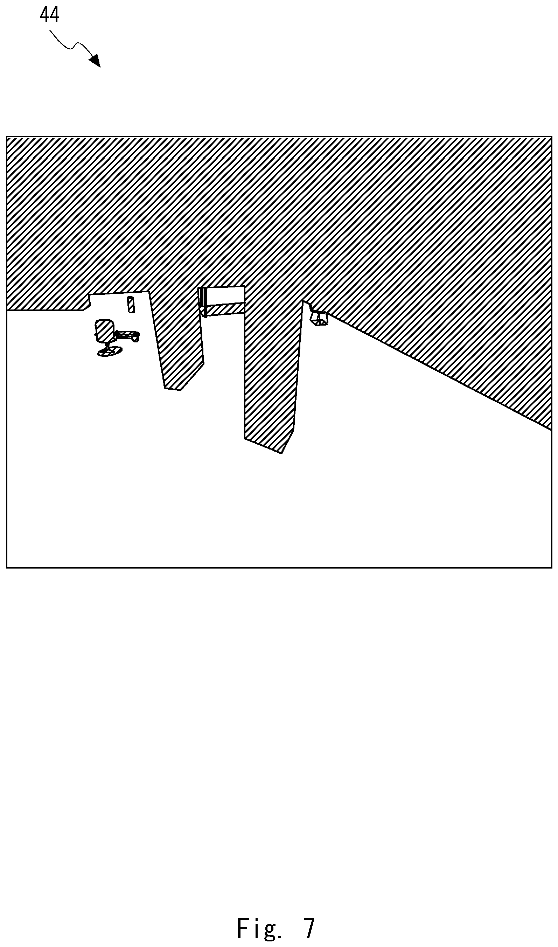

Here, first, an example of a case where a ground truth label image is generated by a known technique without using the generation unit 143 according to the present embodiment will be described. Fig. 7 is a diagram illustrating an example of an old ground truth label image 44 in a state where a side behind the object in the virtual space 3 cannot be identified. The old ground truth label image 44 indicates that any region is labeled as impassable by the moving body without distinguishing the object region 310, the object region 320, and the wall region in Fig. 5 described above.

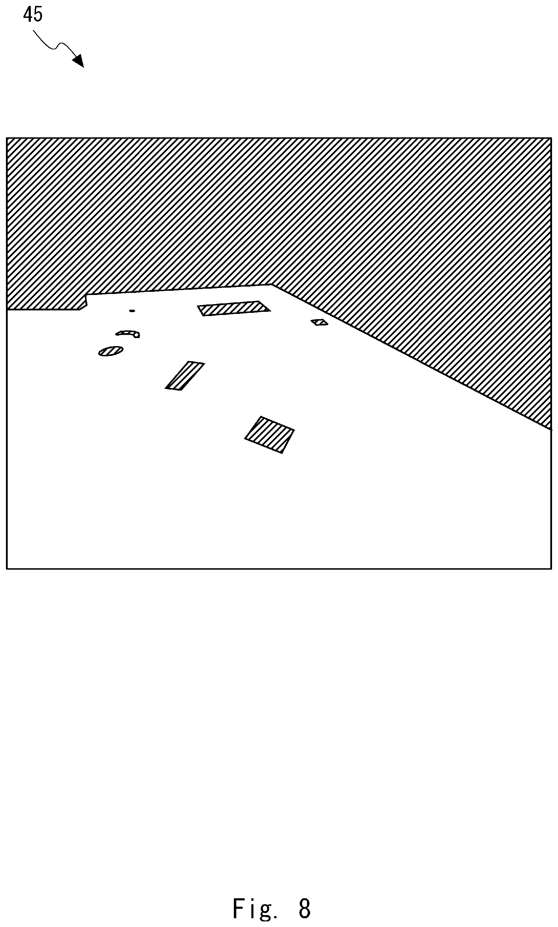

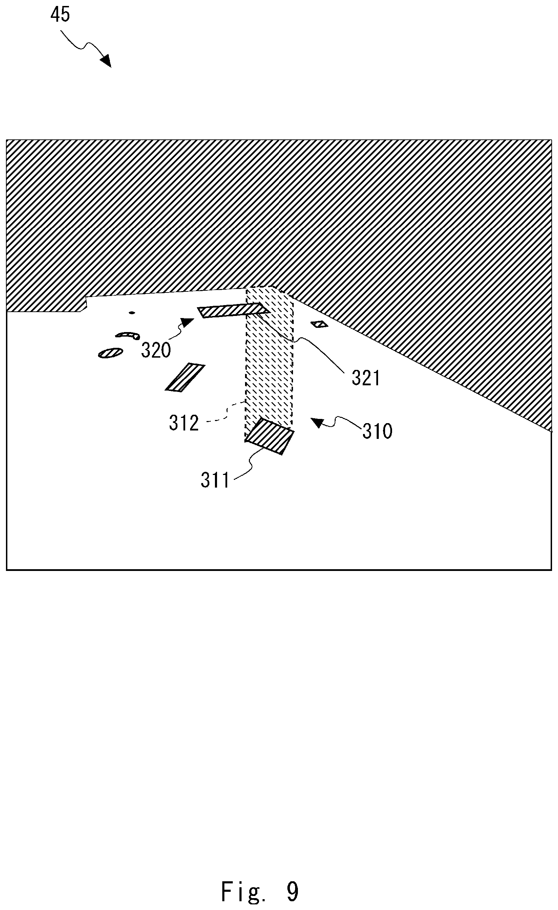

Next, Fig. 8 is a diagram illustrating an example of the ground truth label image 45 of a passable region in the virtual space 3 according to the first embodiment. The ground truth label image 45 indicates that the object region 310, the object region 320, and the wall region in Fig. 5 described above are distinguished, and in particular, a point behind the object 31 is labeled as passable by the moving body. Fig. 9 is a diagram illustrating an example in which different labels are given to the ground plane and the non-ground plane in the object region 310 in order to clarify this point. Here, the object region 310 to which the object 31 corresponds from the viewpoint from the imaging position of the camera 30 is distinguished between the ground plane 311 and the non-ground plane 312. The ground plane 311 is a region where the object 31 and the ground come into contact with each other. The non-ground plane 312 is a region where the object 31 and the ground do not come into contact with each other. However, in the non-ground plane 312, a region where the ground plane 321 of the object region 320 and the object region 310 overlap each other is excluded. Here, the non-ground plane 312 is originally a region that cannot be distinguished from the ground plane 311 from the viewpoint from the imaging position of the camera 30. However, the generation unit 143 can identify the non-ground plane 312 in the object region 310 by using the plane arrangement information based on the arrangement information 41. Then, the ground truth label image 45 can be said to be an image in which the passable region of the moving body and the non-passable region are classified, that is, labeled even from the viewpoint from the imaging position of the camera 30.

Returning to Fig. 4, the description will be continued. The generation unit 143 stores the color information image 42 (1511) and the depth image 43 (1512) acquired in step S13 and the passable region image (ground truth label image 45 (1513)) generated in step S14 in the storage unit 11 as the learning data set 151 (S15). Then, the generation unit 143 determines whether the number of learning data sets is a fixed number (S16). In a case where the number of learning data sets is less than the fixed number in step S16, the process returns to step S11. Then, the learning system 1 executes the processes of steps S11 to S16 again.

Conversely, in a case where the number of learning data sets satisfies the fixed number in step S16, the training unit 144 executes machine learning on the region estimation model 160 using the stored learning data sets 151 to 15m (S17). For example, the training unit 144 sets the color information image 1511 and the depth image 1512 included in the learning data set 151 in the input layer of the region estimation model 160, executes calculation between the respective layers using the parameter 161, and acquires a calculation result of the output layer. The training unit 144 obtains a difference between the label of each pixel included in the calculation result and the label of a pixel corresponding in the ground truth label image 1513, and determines whether the difference is equal to or greater than a predetermined range. If the difference is equal to or greater than the predetermined range, the training unit 144 corrects the parameter 161 and executes the same calculation and determination described above again. If the difference is less than the predetermined range, the training unit 144 repeats a similar process on each of the unlearned learning data sets 152 to 15m. Then, the training unit 144 determines whether a convergence condition of the machine learning is satisfied. For example, in all the learning data sets 152 to 15m, if the difference between the calculation result and the ground truth label image falls within a predetermined range, or if the repetition exceeds a predetermined number of repetitions, the training unit 144 determines that the convergence condition is satisfied. The above-described process is an example of the machine learning. Therefore, the training unit 144 may execute the machine learning by applying any of various algorithms such as an error back propagation method. The generation unit 143 can use, for example, a binary cross entropy loss in loss calculation. However, a scheme for the loss calculation is not limited thereto. If the convergence condition is satisfied in the machine learning, the training unit 144 updates the parameter 161 in the region estimation model 160 to a value during convergence. Then, the learning system 1 ends the learning process.

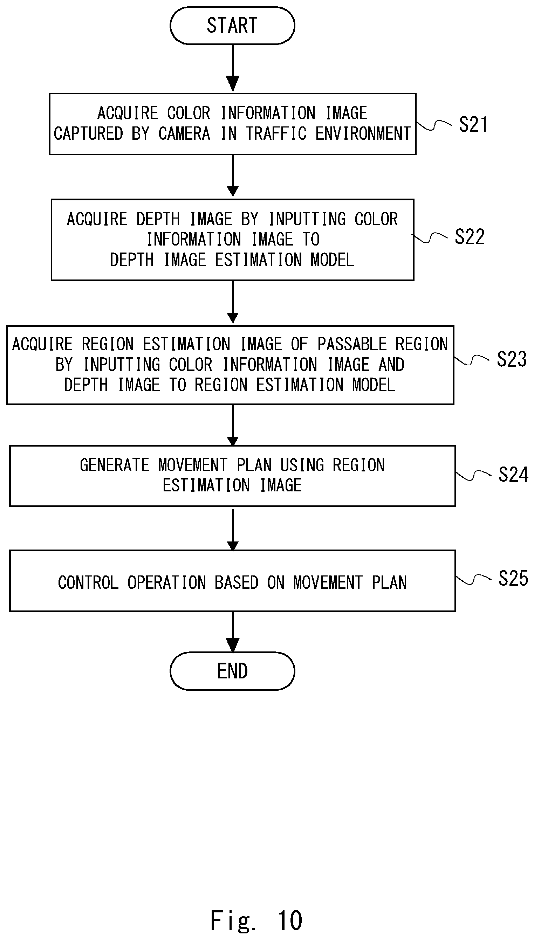

Fig. 10 is a flowchart illustrating a flow of a region estimation process according to the first embodiment. Here, in the moving body 20, it is assumed that the region estimation model 160 trained through the learning process of Fig. 4 described above is registered as the region estimation model 213. In order to execute a predetermined operation in the traffic environment 200, the moving body 20 starts the region estimation process.

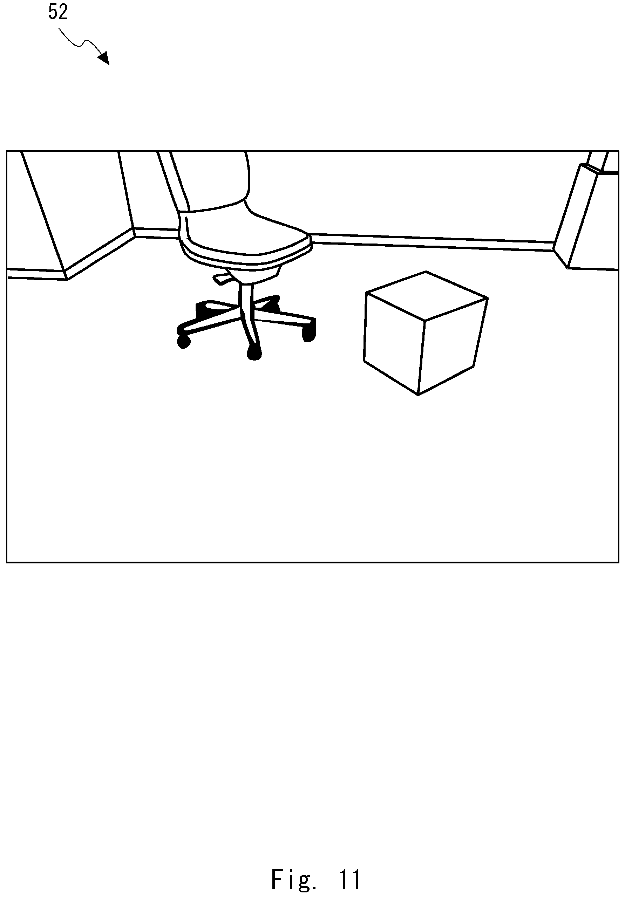

First, the image acquisition unit 241 acquires the color information image 52 captured by the camera 25 of the moving body 20 in the traffic environment 200 (S21). Hereinafter, to facilitate description, it is assumed that an imaging range of the camera 25 includes a plurality of objects including the objects 201 to 20k. Fig. 11 is a diagram illustrating an example of the color information image 52 acquired in step S21.

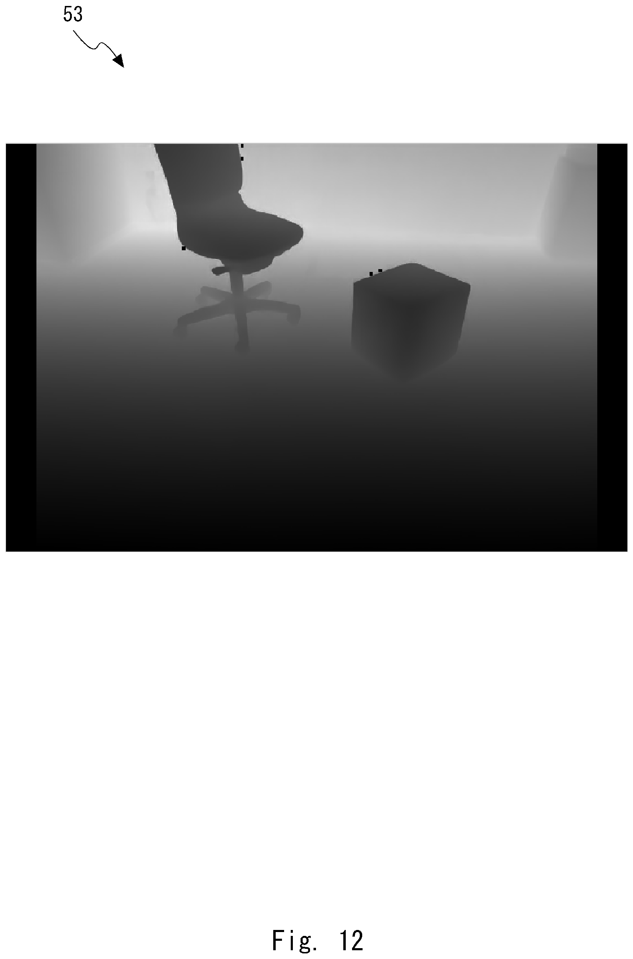

Subsequently, the depth acquisition unit 242 acquires the depth image 53 by inputting the color information image 52 to the depth image estimation model 212 (S22). At this time, the depth image estimation model 212 estimates the depth information of each pixel from the input color information image 52, and generates and outputs the depth image 53 from the estimated depth information. Accordingly, the depth acquisition unit 242 acquires the depth image 53 from the depth image estimation model 212. Fig. 12 is a diagram illustrating an example of the depth image 53.

Subsequently, the estimation unit 243 acquires a region estimation image 55 of the passable region by inputting the color information image 52 and the depth image 53 to the region estimation model 213 (S23). At this time, the estimation unit 243 sets the color information image 52 and the depth image 53 in the input layer of the region estimation model 213, executes calculation between the respective layers using the trained parameters, and acquires a calculation result of the output layer. Here, the calculation result is assumed to be the region estimation image 55. The region estimation image 55 can also be said to be a mask image of a passable region.

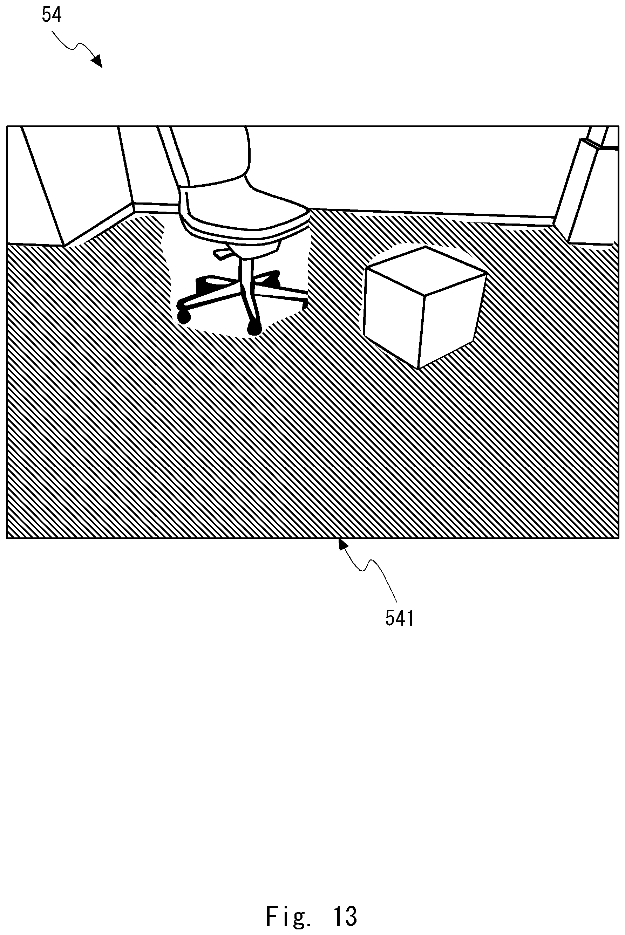

Here, first, an example of a case where a region estimation image is generated by a known technique without using the trained region estimation model 213 according to the present embodiment will be described. Fig. 13 is a diagram illustrating an example of the old region estimation image 54 in a state where a side behind the object cannot be identified. The old region estimation image 54 is an example in which the passable region 541 is superimposed on the depth image 53. The old region estimation image 54 indicates that regions behind a chair and a box are not identified and the entire object region including the regions behind the chair and the box is impassable.

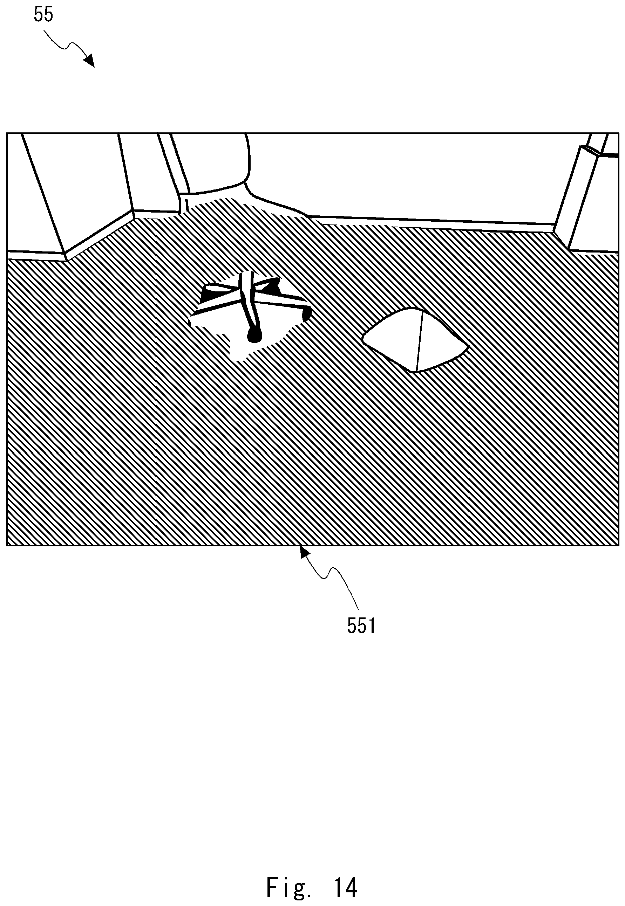

Next, Fig. 14 is a diagram illustrating an example of a region estimation image 55 of a passable region according to the first embodiment. The region estimation image 55 is an example in which the passable region 551 is superimposed on the depth image 53. The region estimation image 55 indicates that regions behind the chair and the box are identified and the regions behind the chair and the box are passable. In the region estimation image 55 of Fig. 14, a display method may be switched between the passable region 551 and another region (impassable region). For example, similarly to the above-described ground truth label image 45, the passable region 551 may be set to white, and the impassable region of the region estimation image 55 may be set to black, hatched, or the like. That is, expression of the region estimation image 55 is not limited thereto.

Returning to Fig. 10, the description will be continued. The movement planning unit 244 generates a movement plan using the region estimation image 55 (S24). Specifically, the movement planning unit 244 generates route information for the moving body 20 to arrive at a destination from a current position via the passable region 551 of the region estimation image 55. The destination may be inside or outside the region estimation image 55. Alternatively, the movement planning unit 244 can be realized in any of various forms based on the region estimation image 55. For example, the movement planning unit 244 may superimpose the depth image 53 and the passable region 551, convert unmasked pixels of the passable region 551 into a 3-dimensional position (coordinate system) of an imaging position of the camera 25 based on the depth value, and generate a set of points of obstacles in passing. The set of points of obstacles may be referred to as an obstacle point cloud. The movement planning unit 244 may generate the route information to the destination to avoid the obstacle point cloud. Alternatively, the movement planning unit 244 may train an AI model that directly calculates a speed of the moving body 20 from the region estimation image 55 and a direction of the destination. Then, the movement planning unit 244 may execute a movement plan using a trained model.

Thereafter, the operation control unit 245 controls an operation of the moving body 20 based on the movement plan generated in step S24 (S25). For example, the operation control unit 245 instructs the traveling unit 26 to travel to the destination according to the route information included in the movement plan. The operation control unit 245 may instruct the gripping unit 27 to execute a predetermined operation after arriving at the destination.

In this way, in the learning system 1 according to the present embodiment, by using the arrangement information of the object in the virtual space, it is possible to accurately provide a label regarding whether to allow passage in the region behind the object in the captured image. It is possible to efficiently generate many learning data sets including such ground truth label information. By using such learning data sets, it is possible to improve learning efficiency of the estimation model and improve the estimation accuracy. Therefore, it is possible to accurately estimate the passable region including the region behind the object in the captured image using the trained estimation model.

Here, in the learning data set according to the present embodiment, an image captured in a virtual space which is an artificial environment is used as input data. That is, since the image is generated by the simulator, noise is small. On the other hand, since the traffic environment 200 is a real environment, the captured image of the real environment is influenced by brightness such as illumination and sunlight unlike the virtual space 3 described above. Accordingly, the captured image in the real environment may contain noise. Therefore, there is a case where accuracy of the estimation of the passable region with respect to the captured image in the real environment is not sufficiently improved only by using the color information image for an input of the learning data of the estimation model. Such a problem may be referred to as a Sim2Real problem.

Therefore, in the present embodiment, in addition to the color information image, the depth information such as the depth image of the imaging range corresponding to the color information image is used for the input of the learning data of the estimation model. Then, in the region estimation process, a highly accurate depth image is acquired from the color information image using the depth image estimation model 212. Accordingly, it is possible to reduce the influence of brightness in a proof in the real environment, that is, inhibit occurrence of the Sim2Real problem.

A method of acquiring a highly accurate depth image in the real environment is as follows. First, it is assumed that the input layer of the depth image estimation model corresponds to each pixel value or the like of one color information image. In this case, the depth acquisition unit 242 inputs a captured image of a monocular camera of the moving body 20 to a depth image estimation model and acquires the depth image. Alternatively, the input layer of the depth image estimation model may correspond to each pixel value or the like of the plurality of color information images. In this case, the depth acquisition unit 242 inputs a captured image of a stereo camera of the moving body 20 to the depth image estimation model and acquires the depth image. Alternatively, the moving body 20 may include an RGBD sensor. In this case, the image acquisition unit 241 and the depth acquisition unit 242 acquire the color information image and the depth image by the RGBD sensor. Alternatively, the moving body 20 may further include a 3D light detection and ranging (LiDAR). In this case, the image acquisition unit 241 and the depth acquisition unit 242 acquire the color information image and the depth image from a combination of the monocular camera and the 3D LiDAR.

The region estimation process according to the present embodiment may be applied not only to the movement plan but also to a manipulation plan or task planning of a robot or the like. For example, the moving body 20 includes an operation planning unit. The operation planning unit may estimate a work space in which a manipulation can be executed by the gripping unit 27 based on the region estimation image estimated by the estimation unit 243 and may generate an operation plan for controlling an operation by inserting the gripping unit 27 behind the object. Alternatively, the operation planning unit may add a region behind the object to the candidates for an arrangement place when a place where the object is placed is selected when the arrangement of the object is changed using the region estimation image. Accordingly, it is possible to generate a more flexible manipulation plan. The moving body 20 may include a task planning unit. The task planning unit may plan various tasks in the moving body 20 by explicitly considering a region behind an object using a region estimation image.

For the "information regarding passability or impassability of the moving body" according to the present embodiment, that is, the label, three values indicating passability, impassability, or that it is necessary to confirm passability or impassability may be used. Specifically, the generation unit 143 may give a label indicating passability, or that it is necessary to confirm passability or impassability in a region behind the object. In this case, the estimation unit 243 preferably acquires, from the region estimation model 213, a region estimation image including a passable region and a passable or impassable confirmation-required region. The movement planning unit 244 may generate a movement plan to move the moving body 20 toward the passable or impassable confirmation-required region in the region estimation image, image a region behind the object with a camera, and confirm actual passability or impassability. This is because in a case where the region behind the object is large, there is a high uncertainty on whether an object can actually pass.

The moving body 20 is not limited to a robot that autonomously travels as described above, and can also be applied to an autonomous driving vehicle, a vehicle driven by a human, and the like.

In the above-described example, a program includes a group of instructions (or software codes) for causing a computer to execute one or more functions described in the embodiments when being read by the computer. The program may be stored in a non-transitory computer-readable medium or a tangible storage medium. By way of example, and not limitation, computer-readable media or tangible storage media include a random-access memory (RAM), a read-only memory (ROM), a flash memory, a solid-state drive (SSD) or other memory techniques, a CD-ROM, a digital versatile disc (DVD), a Blu-ray (registered trademark) disc or other optical disc storages, a magnetic cassette, a magnetic tape, a magnetic disk storage, or other magnetic storage devices. The program may be transmitted on a transitory computer-readable medium or a communication medium. By way of example, and not limitation, transitory computer-readable or communication media include electrical, optical, acoustic, or other forms of propagated signals.

Note that the present disclosure is not limited to the above embodiment, and can be appropriately changed without departing from the gist. The present disclosure may be implemented by appropriately combining the respective embodiments.

The present application claims priority based on Japanese Patent Application No. 2023-119198 filed on July 21, 2023, the entire disclosure of which is incorporated herein.

### Reference Signs List

- 1: LEARNING SYSTEM
- 11: STORAGE UNIT
- 111: SIMULATOR PROGRAM
- 112: LEARNING PROGRAM
- 113: ARRANGEMENT INFORMATION
- 151: LEARNING DATA SET
- 1511: COLOR INFORMATION IMAGE
- 1512: DEPTH IMAGE
- 1513: GROUND TRUTH LABEL IMAGE
- 15m: LEARNING DATA SET
- 160: REGION ESTIMATION MODEL
- 161: PARAMETER
- 12: MEMORY
- 13: COMMUNICATION UNIT
- 14: CONTROL UNIT
- 141: ARRANGEMENT UNIT
- 142: ACQUISITION UNIT
- 143: GENERATION UNIT
- 144: TRAINING UNIT
- 2: REGION ESTIMATION SYSTEM
- 200: TRAFFIC ENVIRONMENT
- 201: OBJECT
- 20k: OBJECT
- 20: MOVING BODY
- 21: STORAGE UNIT
- 211: MOVEMENT PLANNING PROGRAM
- 212: DEPTH IMAGE ESTIMATION MODEL
- 213: REGION ESTIMATION MODEL
- 22: MEMORY
- 23: COMMUNICATION UNIT
- 24: CONTROL UNIT
- 241: IMAGE ACQUISITION UNIT
- 242: DEPTH ACQUISITION UNIT
- 243: ESTIMATION UNIT
- 244: MOVEMENT PLANNING UNIT
- 245: OPERATION CONTROL UNIT
- 25: CAMERA
- 26: TRAVELING UNIT
- 27: GRIPPING UNIT
- 3: VIRTUAL SPACE
- 30: CAMERA
- 31: OBJECT
- 310: OBJECT REGION
- 311: GROUND PLANE
- 312: NON-GROUND PLANE
- 32: OBJECT
- 320: OBJECT REGION
- 321: GROUND PLANE
- 3n: OBJECT
- 41: ARRANGEMENT INFORMATION
- 42: COLOR INFORMATION IMAGE
- 43: DEPTH IMAGE
- 44: OLD GROUND TRUTH LABEL IMAGE
- 45: GROUND TRUTH LABEL IMAGE
- 52: COLOR INFORMATION IMAGE
- 53: DEPTH IMAGE
- 54: OLD REGION ESTIMATION IMAGE
- 541: PASSABLE REGION
- 55: REGION ESTIMATION IMAGE
- 551: PASSABLE REGION

## Claims

1. A learning system comprising:
a generation unit configured to generate ground truth label information including information regarding passability or impassability of a moving body at a point behind an object from a viewpoint from an arbitrary imaging position using arrangement information of the object arranged at an arbitrary position in a virtual space; and
a training unit configured to train an estimation model that estimates a passable region of the moving body in the imaging region using a color information image in which the imaging region including the object is imaged from the imaging position, depth information from the imaging position to the imaging region, and the ground truth label information.

2. The learning system according to claim 1, wherein the generation unit generates the ground truth label information by regarding at least a region other than a horizontal projection plane in a case where the object is viewed from above based on the arrangement information in an object region corresponding to the object in the imaging region, as a point behind the object from a viewpoint from the imaging position.

3. The learning system according to claim 2, wherein the generation unit generates the ground truth label information by making at least a ground plane of the object specified based on the arrangement information in the object region impassable and making at least a region other than the horizontal projection plane passable.

4. The learning system according to claim 3, wherein the generation unit generates the ground truth label information by making a region of the horizontal projection plane including the ground plane in the object region impassable.

5. The learning system according to claim 2, wherein the generation unit generates the ground truth label information such that a different label related to the passability or impassability is given to each point included in the object region depending on whether the point is behind the object from a viewpoint from the imaging position.

6. The learning system according to claim 1 or 2, wherein the generation unit generates, as the ground truth label information, a passable region image to which a label related to the passability or impassability is given to each pixel of an image in which the imaging region is imaged from the imaging position.

7. The learning system according to claim 6, wherein the generation unit specifies plane arrangement information including the object in the virtual space from the arrangement information, and generates the passable region image serving as a viewpoint from the imaging position using the plane arrangement information.

8. The learning system according to claim 1 or 2, wherein the generation unit generates the ground truth label information such that a label indicating that it is necessary to confirm the passability or impassability is given to a point behind the object.

9. The learning system according to claim 1 or 2, wherein the training unit executes machine learning on the estimation model using a learning data set in which the color information image and the depth information are set as input data and the ground truth label information is set as ground truth data.

10. The learning system according to claim 1 or 2, further comprising:
an arrangement unit configured to arrange the object at an arbitrary position in the virtual space and arrange an imaging device at the imaging position; and
an acquisition unit configured to acquire the color information image in which the imaging region is imaged from the imaging position by the imaging device, and acquire a depth image in which a distance from the imaging position to the imaging region is measured as the depth information.

11. A learning method causing a computer to execute:
generating ground truth label information including information regarding passability or impassability of a moving body at a point behind an object from a viewpoint from an arbitrary imaging position using arrangement information of the object arranged at an arbitrary position in a virtual space; and
training an estimation model that estimates a passable region of the moving body in the imaging region using a color information image in which the imaging region including the object is imaged from the imaging position, depth information from the imaging position to the imaging region, and the ground truth label information.

12. A learning program causing a computer to execute:
a generation process of generating ground truth label information including information regarding passability or impassability of a moving body at a point behind an object from a viewpoint from an arbitrary imaging position using arrangement information of the object arranged at an arbitrary position in a virtual space; and
a learning process of training an estimation model that estimates a passable region of the moving body in the imaging region using a color information image in which the imaging region including the object is imaged from the imaging position, depth information from the imaging position to the imaging region, and the ground truth label information.

13. A region estimation system comprising an estimation unit configured to estimate a passable region in a second region by inputting, to the estimation model trained by the learning system according to claim 1, a second color information image obtained by imaging the second region including a second object from a second imaging position of a predetermined traffic environment and second depth information from the second imaging position to the second region.
